# EUROPÄISCHE PATENTSCHRIFT

(11) **EP 4 417 300 B1**
(45) Veröffentlichungstag und Bekanntmachung des Hinweises auf die Patenterteilung: **27.08.2025**
(21) Anmeldenummer: 24153444.5
(22) Anmeldetag: 23.01.2024
(51) Int. Cl.: B01F 27/81, B01F 35/11, B01F 35/71, B01F 35/92, B08B 3/02, A23C 11/10, A23L 2/00, A47J 31/00, B01F 101/14

(54) **VORRICHTUNG UND VERFAHREN ZUR HERSTELLUNG EINES MILCHERSATZPRODUKTES**
DEVICE AND METHOD FOR PRODUCING A MILK SUBSTITUTE PRODUCT
DISPOSITIF ET PROCÉDÉ DE FABRICATION D'UN PRODUIT DE REMPLACEMENT DU LAIT

(30) Priorität: 26.01.2023 DE 102023101947
(43) Veröffentlichungstag der Anmeldung: 21.08.2024
(60) Teilanmeldung: 25174563.4
(73) Patentinhaber: OIY Solutions GmbH, 50827 Köln (DE)
(72) Erfinder: Nesti, Sarah, 50677 Köln (DE); Auer, Benjamin, 76646 Bruchsal (DE); Uhländer, Björn, 49716 Meppen (DE); Leng, Thomas, 31535 Neustadt (DE)
(74) Vertreter: IPrime Bonnekamp Sparing Patentanwaltsgesellschaft mbH

(56) Entgegenhaltungen:
- WO-A1-2021/099457
- WO-A1-2022/253474
- WO-A2-02/065855
- CN-A- 105 903 423
- CN-A- 109 529 724
- CN-A- 111 514 779
- CN-A- 115 322 761
- CN-U- 207 985 737
- DE-A1- 10 245 862
- DE-A1- 19 639 695
- US-B2- 7 678 403

## Beschreibung

Die Erfindung betrifft eine Vorrichtung zur Herstellung eines Milchersatzproduktes.

Es besteht aufgrund der veganen Lebensweise vieler Menschen das Bedürfnis, entsprechende Alternativen für nicht-vegane Produkte frisch und umweltschonend herzustellen. Neben den Alternativen für Fleischprodukte zählen hierzu auch Alternativen für Milchprodukte, welche im Allgemeinen eine pflanzliche Hauptzutat enthalten, welche als Geschmacks- und Nährstoffgeber in einer Suspension mit Wasser dient. In Hafermilch beispielsweise dient der Hafer als der Geschmacks- und Nährstoffgeber. Um insbesondere den etwas süßlichen Geschmack von Milch zu erhalten, ist die Spaltung der in dem Hafer vorhandenen Stärke in Zucker erforderlich, die in einem mehrschrittigen Verfahren durchgeführt wird. Typischerweise wird Hafermilch in industriellen Anlagen daher in mehreren den jeweiligen einzelnen Verfahrensschritten zugeordneten Stationen produziert, wobei zwar eine große Menge von Hafermilch hergestellt werden kann, jedoch die Herstellung nachteilig auf Vorrat vorgenommen, das fertige Milchersatzprodukt in Verpackungen an die Endverbraucher geliefert wird und darüber hinaus einen relativ hohen Energieverbrauch aufweist. Es besteht daher im Interesse der Frische der Milchersatzprodukte das Bedürfnis, eine dezentrale Herstellung vor Ort mit möglichst geringem Aufwand bereitzustellen, sowie Liefervolumen zu reduzieren, indem nur der proportional geringe Anteil an Rohzutaten in Milchersatzprodukten an den Verbraucher geliefert wird.

DE 20 2012 103 875 U1 zeigt eine Vorrichtung zur Herstellung eines Hafergetränks. Die Vorrichtung umfasst einen heizbaren ersten Behälter und einen zweiten Behälter, wobei zwischen dem ersten Behälter und dem zweiten Behälter ein Puffergefäß angeordnet ist, welches zur Abkühlung der aufgeheizten Hafersuspension aus dem ersten Behälter dient. Über ein an dem zweiten Behälter angeordnetes Boden-Auslassventil wird schließlich das fertige Hafergetränk entnommen. Nachteilig umfasst die Vorrichtung mehrere Behälter, welche kaskadenartig angeordnet sind, sodass ein entsprechend hoher Platzbedarf der Vorrichtung vorliegt und die Vorrichtung sehr aufwendig ausgebildet und entsprechend kostenintensiv in der Wartung und im Betrieb ist.

CN 113 349 320 A zeigt eine Vorrichtung zur Herstellung eines Hafergetränks, wobei räumlich getrennte bzw. über Zuleitungen miteinander verbundene getrennte Verarbeitungsstationen vorgesehen sind. Nachteilig ist auch hier die Vorrichtung wenig bauraumsparend und im Übrigen auch recht komplex ausgebildet.

CN 216 704 118 U zeigt eine Vorrichtung zur Herstellung eines Hafergetränks, umfassend einen Behälter, welcher einen Auslass zur Entnahme des fertigen Hafergetränks aufweist. Auf der Oberseite des Behälters sind zwei Mischbehälter angeordnet, welche jeweils einen Motor an ihrer Oberseite zum Antrieb einer Drehbewegung der in den Mischbehälter hineinragenden, an einer Drehachse angeordneten Rührelemente aufweisen. Die zu vermischenden Zutaten werden über seitlich angeordnete Zugänge zugeführt und nach der Durchmischung über die mit Ventilen absperrbaren Auslässe in dem darunter befindlichen Behälter weitertransportiert. Weiter umfasst die Vorrichtung eine Reinigungsvorrichtung, welche mehrere Reinigungsdüsen umfasst, welche durch einen Wassereinlass mit Wasser versorgt werden. Nachteilig an der gezeigten Vorrichtung ist, dass diese neben dem Behälter mit dem Auslass zur Entnahme des fertigen Hafergetränks einen zusätzlichen Mischbehälter umfasst. Nachteilig ist die Vorrichtung wenig kompakt aufgebaut und ist daher wenig geeignet, frische Hafergetränke in kleineren Räumlichkeiten herzustellen. Darüber hinaus umfasst die Vorrichtung keine Heizmöglichkeit, sodass die für die Herstellung von frischer Hafermilch erforderlichen erhöhten Temperaturen nicht bereitgestellt werden können.

DE 102 45 862 A1 zeigt eine Vorrichtung zum Mischen von pulverförmigen Substanzen in Flüssigkeiten, umfassend einen Behälter mit einem Innenmantel, einer oberen Öffnung und einem unteren konischen Ende, an dem ein Auslass vorgesehen ist. Auf der oberen Öffnung ist ein Deckel angeordnet, wobei am Deckel Zuführungen für eine Wasserspülvorrichtung, eine Unterdruckleitung und eine Pressluftleitung angeordnet sind. An dem Deckel ist weiter eine Gebindeaufnahmevorrichtung vorgesehen, die mit einer Zuführleitung zur Zuführung der pulverförmigen Substanz verbunden ist. In die Gebindeaufnahmevorrichtung kann ein Gebinde eingesetzt werden, welches über eine mit einem Absperrorgan absperrbare Förderleitung mit einen Vorratsbehälter verbunden ist, welches die pulverförmige Subtanz enthält. Zum Öffnen eines Zuführungsventils wird ein Unterdruck in dem Behälter erzeugt, welcher zur Öffnung des Ventils und dem Einsaugen der pulverförmigen Substanz in den Behälter führt. Weiter ist eine Rührvorrichtung zum Rühren vorgesehen, welche einen Motor oberhalb des Deckels und einen in den Behälter eingeführten Rührstab umfasst. Im unteren Bereich des Behälters ist ein Heizmantel angeordnet.

Es ist die Aufgabe der Erfindung, eine Vorrichtung zur Herstellung eines Milchersatzproduktes anzugeben, wobei die Vorrichtung bauraumsparend und kostengünstig ausgebildet ist und die Herstellung eines verzehrfertigen frischen Milchersatzproduktes zeit- und energiesparend ermöglicht.

Die vorgenannte Aufgabe wird erfindungsgemäß durch eine Vorrichtung zur Herstellung eines Milchersatzproduktes gemäß Anspruch 1 gelöst.

Gemäß einem Aspekt der Erfindung ist eine Vorrichtung zur Herstellung eines Milchersatzproduktes geschaffen, umfassend einen Behälter mit einem einen Hohlraum definierenden Innenmantel und einer oberen Öffnung zur Aufnahme der zur Herstellung des Milchersatzproduktes erforderlichen Zutaten und einem Auslass zur Entnahme des verzehrfertigen Milchersatzproduktes. Weiter umfasst die Vorrichtung einen Deckel, welcher auf der Öffnung des Behälters angeordnet ist, eine Rührvorrichtung zum Rühren und Dispergieren der in den Behälter aufgenommenen Zutaten, wobei die Rührvorrichtung zumindest ein angetrieben drehbares Rührelement umfasst, welches in dem Hohlraum angeordnet ist. Weiter umfasst die Vorrichtung eine Reinigungsvorrichtung zur automatisierten Reinigung zumindest des Innenmantels des Behälters und eine Heizvorrichtung zur Heizung des Innenmantels des Behälters, wobei der Deckel einen ersten Einlass umfasst, durch welchen hindurch bevorzugt eine trockene Zutatenmischung in den Hohlraum des Behälters zugeführt werden kann und wobei der Deckel eine Verschlussvorrichtung mit einem Verschlusselement zum selektiven Öffnen und Schließen des ersten Einlasses umfasst. Das Verschlusselement weist dabei eine erste Durchlassöffnung auf, welche gegenüber dem ersten Einlass verlagerbar ist, wobei das Verschlusselement über einen Antriebsmotor zwischen einer Schließstellung, in der das Verschlusselement den ersten Einlass verschließt, und einer Öffnungsstellung, in der das Verschlusselement den ersten Einlass öffnet, verstellbar ist. Die erfindungsgemäße Vorrichtung zeichnet sich dadurch aus, dass der Deckel ein oberes Deckelteil und ein unteres Deckelteil umfasst, wobei das Verschlusselement zwischen dem oberen Deckelteil und dem unteren Deckelteil beweglich angeordnet ist. Vorteilhaft wird durch Verlagerung des Verschlusselementes und der in dem Verschlusselement vorhandenen Durchlassöffnung entweder der Durchgang zwischen dem ersten Einlass und der ersten Durchlassöffnung des unteren Deckelteils versperrt oder freigegeben. Die erfindungsgemäße Vorrichtung hat weiter den Vorteil, dass zur Herstellung des Milchersatzproduktes lediglich ein einziger Behälter benötigt wird, wobei alle zur Herstellung des Milchersatzproduktes erforderlichen Verfahrensschritte gleichzeitig in dem Behälter vorgenommen werden können. Vorteilhaft lässt sich die Vorrichtung in kleineren Räumlichkeiten, wie beispielsweise in der Küche eines Cafés oder Privaträumlichkeiten zur Herstellung von Milchersatzprodukten nutzen, wobei die Vorrichtung über einen einfachen Haushaltsstromanschluss mit Energie versorgt wird. Weiterhin lässt sich die Vorrichtung auch in Verkaufsstellen wie Einzelhandelsgeschäften nutzen.

Zweckmäßigerweise umfasst der Deckel weiter einen zweiten Einlass, durch welchen hindurch Wasser in den Hohlraum des Behälters zugeführt werden kann. Weiter bevorzugt umfasst der Deckel einen dritten Einlass, durch welchen hindurch eine niederviskose Flüssigkeit, insbesondere Öl in den Hohlraum des Behälters zugeführt werden kann. Das Zuführen von Öl wird häufig im Zusammenhang mit Milchersatzprodukten als Veredelungsschritt durchgeführt. Die in der Vorrichtung zur Herstellung des Milchersatzproduktes vorhandene Rührvorrichtung wird vorteilhaft dazu verwendet, das Öl unterzumischen und zu verteilen. Vorteilhaft ist es nicht erforderlich, dass der Deckel für die Zuführung der Zutatenmischung und der weiteren Bestandteile wie Wasser und Öl von dem Behälter entfernt werden muss, sondern die Zuführung der Zutaten vorteilhaft automatisiert bei geschlossenem Deckel erfolgt.

Weiter bevorzugt ist die Verschlussvorrichtung weiter dazu ausgebildet, den zweiten Einlass und den dritten Einlass sequenziell zu öffnen und zu schließen. Vorteilhaft wird durch die Verschlussvorrichtung sichergestellt, dass die jeweiligen Einlässe jeweils nicht während der Öffnung eines der anderen Einlässe und der Zuführung der jeweiligen Zutat oder während des Herstellungsprozesses durch Spritzen oder aufsteigende Dämpfe verunreinigt werden. Beispielsweise wird hierdurch verhindert, dass die trockene Zutatenmischung während der Zugabe des Wassers nicht mit diesem vorzeitig in Kontakt gerät.

Zweckmäßigerweise weist das obere Deckelteil den ersten Einlass auf, wobei das untere Deckelteil eine erste Durchlassöffnung aufweist, welche deckungsgleich unter dem ersten Einlass angeordnet ist. Das obere Deckelteil und das untere Deckelteil sind dabei fest miteinander verbunden.

In einer ersten bevorzugten Ausgestaltung ist vorgesehen, dass das Verschlusselement drehbar ist. Vorteilhaft kann das Verschlusselement einfach durch ein rotierendes Antriebselement gedreht werden, wobei eine besonders genaue und zuverlässige Verlagerung der in dem Verschlusselement vorhandenen Durchlassöffnung durch Drehung vorgenommen werden kann. Alternativ oder zusätzlich hierzu kann es jedoch auch vorgesehen sein, dass das Verschlusselement linear geführt ist.

Besonders bevorzugt ist die Heizvorrichtung zwischen einer Außenseite des Innenmantels und einer den Behälter umgebenen Isolierung angeordnet. Vorteilhaft ist für die Aufrechterhaltung einer bestimmten Temperatur innerhalb des Behälters keine allzu hohe Heizleistung erforderlich, da die Heizvorrichtung direkt mit dem Innenmantel in Kontakt steht und zudem der Wärmeverlust durch die Isolierung geringgehalten wird. Zweckmäßigerweise ist die Heizvorrichtung als Heizmanschette ausgebildet. Vorteilhaft kann die Heizvorrichtung leicht ausgetauscht werden und tritt nicht in Kontakt mit dem hergestellten Produkt.

Weitere Vorteile, Weiterbildungen und Eigenschaften der Erfindung ergeben sich aus der nachstehenden Beschreibung mehrerer bevorzugter Ausführungsbeispiele sowie aus den abhängigen Ansprüchen.

Die Erfindung wird nunmehr unter Bezugnahme auf die anliegenden Zeichnungen anhand eines bevorzugten Ausführungsbeispiels der Erfindung näher erläutert.
- Fig. 1: zeigt ein bevorzugtes Ausführungsbeispiel einer Vorrichtung zur Herstellung eines Milchersatzproduktes in einer Seitenansicht.
- Fig. 2: zeigt die Vorrichtung zur Herstellung eines Milchersatzproduktes aus Fig. 1 in einer Querschnittsansicht.
- Fig. 3: zeigt den in Fig. 1 und Fig. 2 gezeigten Deckel der Vorrichtung zur Herstellung eines Milchersatzproduktes in einer Explosionsdarstellung.

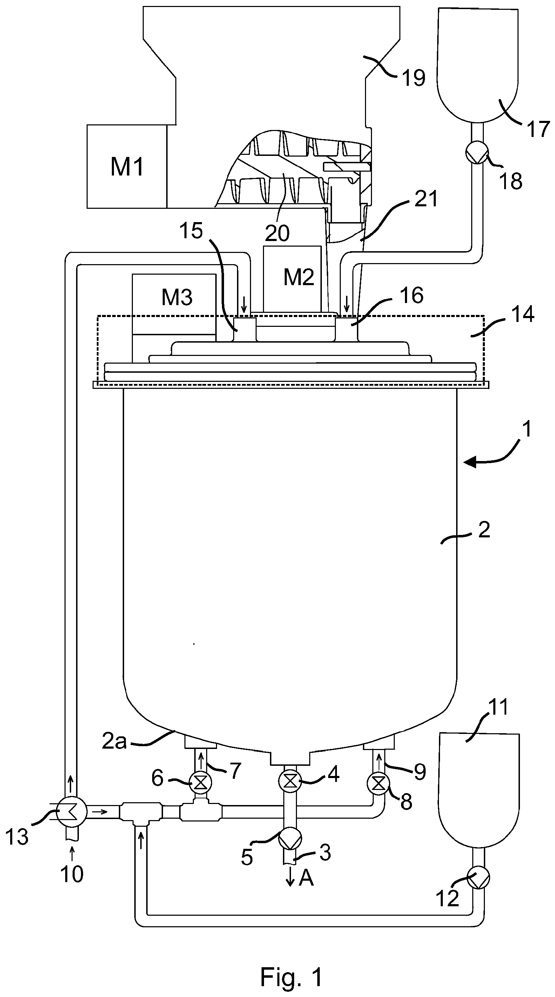

Fig 1 zeigt ein bevorzugtes Ausführungsbeispiel einer Vorrichtung 1 zur Herstellung eines Milchersatzproduktes in einer Seitenansicht. Die Vorrichtung 1 umfasst einen als Batchbehälter ausgebildeten Behälter 2, in welchem alle wesentlichen Reaktionsprozesse zur Herstellung des Milchersatzproduktes ausgeführt werden. Der Behälter 2 weist eine zylinderförmige Form auf, wobei der Boden 2a des Behälters 2 abgerundet ausgebildet ist. Am Boden 2a des Behälters 2 ist ein Auslass 3 angeordnet, durch welchen das verzehrfertige Milchersatzprodukt in Ausflussrichtung A entnehmbar ist.

Zwischen dem Boden 2a des Behälters 2 und dem Auslass 3 sind ein erstes Ventil 4 und eine erste Pumpe 5 angeordnet. Das Ventil 4 in Kombination mit der Pumpe 5 ermöglicht es vorteilhaft, eine genaue Menge des Milchersatzproduktes zu entnehmen.

Neben dem Auslass 3 sind mit dem Boden 2a des Behälters 2 eine über ein zweites Ventil 6 absperrbare erste Zuleitung 7 und eine über ein drittes Ventil 8 absperrbare zweite Zuleitung 9 verbunden. Die erste Zuleitung 7 und die zweite Zuleitung 9 sind zum einen mit einem Wasseranschluss 10 und zum anderen mit einem Reinigungsbehälter 11 verbunden. Das in dem Reinigungsbehälter 11 befindliche Reinigungsmittel kann dabei mittels einer Reinigungspumpe 12 gemeinsam mit dem durch den Wasseranschluss 10 zugeführten Wasser über die Zuleitungen 7, 9 in den Innenraum des Behälters 2 gepumpt werden, sodass der Innenraum regelmäßig von darin befindlichen Resten der darin zubereiteten Milchersatzprodukte gereinigt werden kann. Alternativ kann jedoch auch lediglich das Wasser zur Reinigung verwendet werden. Im Zulauf des Wasseranschlusses 10 ist weiter eine Wärmetauscher 13 vorgesehen, sodass das aus dem Wasseranschluss 10 kommende kalte Wasser dem Innenraum des Behälters 2 vorgewärmt zugeführt werden kann, was eine effizientere und gründliche Reinigung ermöglicht.

Der Behälter 2 ist durch einen in Fig. 1 gestrichelt eingerahmten Deckel 14 verschließbar, wobei die zur Herstellung des Milchersatzproduktes notwendigen Zutaten durch den Deckel 14 hindurch dem Innenraum des Behälters 2 zugeführt werden können. Der Deckel 14 umfasst hierzu an seiner Oberseite einen Einlass 15, welcher mit dem Wasseranschluss 10 verbunden ist. Vorteilhaft ist der Wasseranschluss 10 sowohl für die Reinigung des Innenraumes des Behälters 2 als auch für die Zuführung des für die Herstellung des Milchersatzproduktes notwendigen Wassers nutzbar.

Weiter ist an der Oberseite des Deckels 2 ein weiterer Einlass 16 für eine niederviskose Flüssigkeit, insbesondere Öl vorgesehen. Die niederviskose Flüssigkeit kann vorteilhaft aus einem mit dem Einlass 16 verbundenen Flüssigkeitsbehälter 17 mittels einer Pumpe 18 in den Behälter 2 gepumpt werden. Durch entsprechende Steuerung der Pumpe 18 kann so eine genaue Dosierung der niederviskosen Flüssigkeit vorgenommen werden.

Weiter umfasst die Vorrichtung 1 einen Zutatenmischungsbehälter 19, welcher teilweise aufgeschnitten dargestellt ist. Wie zu erkennen, ist in dem Zutatenmischungsbehälter 19 eine als Förderschnecke ausgebildete Zuführungseinrichtung 20 angeordnet, welche durch einen ersten Antriebsmotor M1 angetrieben wird. Vorteilhaft wird die in dem Zutatenmischungsbehälter 19 vorhandene Zutatenmischung durch Betätigung des ersten Antriebsmotors M1 und der hierdurch gedrehten Förderschnecke 20 in einen Fülltrichter 21 transportiert, wobei der Fülltrichter 21 mit dem Deckel 14 verbunden ist. Darüber hinaus erzeugt der erste Antriebsmotor M1 zusätzlich eine Vibration, welche sich auf den Zutatenmischungsbehälter 19 überträgt, sodass die in dem Zutatenmischungsbehälter befindliche trockene Zutatenmischung zuverlässig nach unten in Richtung der Förderschnecke 20 fallen kann und zudem eine gleichmäßige Verteilung erfolgt.

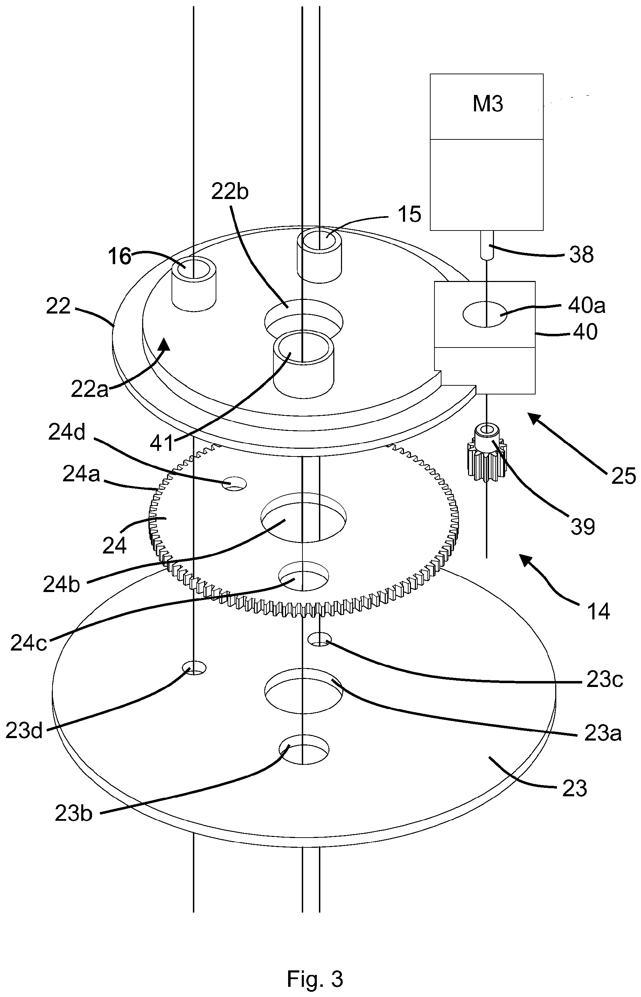

In der Mitte des Deckels 14 ist ein zweiter Antriebsmotor M2 angeordnet, welcher eine in dem Behälter 2 befindliche Rührvorrichtung antreibt. Weiter ist ein dritter Antriebsmotor M3 seitlich von dem zweiten Antriebsmotor M2 auf der Oberseite des Deckels 14 angeordnet, wobei der dritte Antriebsmotor M3 eine in dem Deckel 14 vorgesehene Verschlussvorrichtung antreibt. Die Funktionsweise der hier nicht dargestellten Verschlussvorrichtung wird nachfolgend in Bezug auf die Fig. 3 noch näher erläutert.

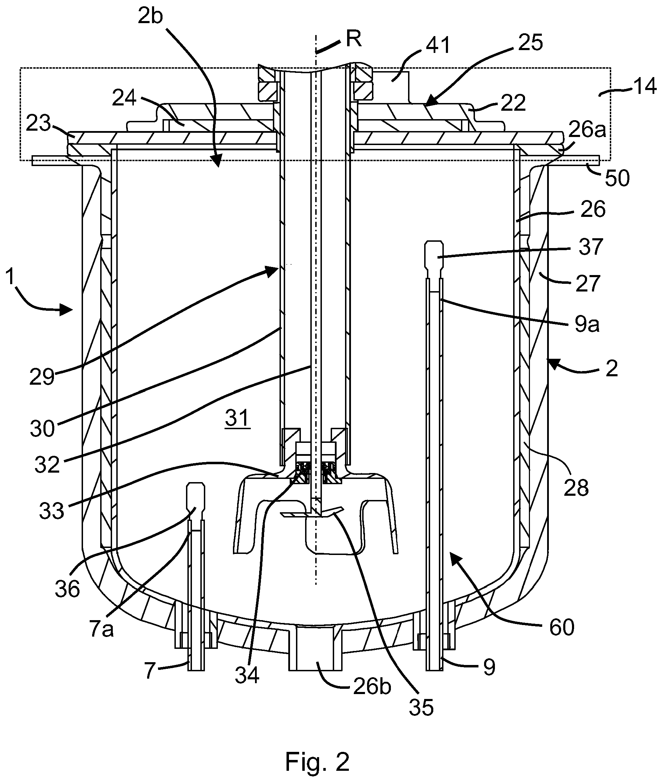

Fig. 2 zeigt die Vorrichtung 1 zur Herstellung eines Milchersatzproduktes aus Fig. 1 in einer Querschnittsansicht. In dieser Ansicht ist zu sehen, dass ein Einlass 41 an der Oberseite des Deckels 14 vorgesehen ist, welcher mit dem Fülltrichter 21 verbunden wird. Weiter ist zu erkennen, dass der Deckel 14 ein oberes Deckelteil 22 umfasst, wobei das obere Deckelteil 22 drehfest mit einem unteren Deckelteil 23 verbunden ist. Zwischen dem oberen Deckelteil 22 und dem unteren Deckelteil 23 ist ein Verschlusselement 24 angeordnet, welches um eine zentrale Rotationsachse R drehbar ist. Das obere Deckelteil 22, das untere Deckelteil 23 und das Verschlusselement 24 bilden gemeinsam einen Teil einer Verschlussvorrichtung 25, welche den Deckel 14 zur Zuführung der Zutatenmischung, des Wassers und der bevorzugt als Öl ausgebildeten niederviskosen Flüssigkeit automatisiert öffnen und schließen kann. Der Aufbau der Verschlussvorrichtung 25 wird weiter unten mit Bezug auf die Fig. 3 näher erläutert.

Weiter ist in Fig. 2 der Aufbau des Behälters 2 zu erkennen. Der Behälter 2 umfasst einen Innenmantel 26 mit einer oberen Öffnung 2b, eine an der Außenseite des Behälters 2 angeordnete Isolierung 27 und eine als Heizmanschette ausgebildete Heizungsvorrichtung 28, welche radial zwischen dem Innenmantel 26 und der Isolierung 27 angeordnet ist. Vorteilhaft ist der Behälter 2 beheizbar ausgebildet. Insbesondere wird durch die Beheizung des Innenmantels 26 vorteilhaft die Möglichkeit eröffnet, die zur Herstellung des Milchersatzproduktes in den Behälter 2 zugeführten Zutaten auf eine vordefinierte Temperatur zu erhitzen und diese vordefinierte Temperatur über einen längeren Zeitraum zu halten.

Der Innenmantel 26 weist oben einen umlaufenden Kragen 26a auf, wobei der umlaufende Kragen 26a zwischen dem unteren Deckelteil 23 und mehreren L-förmigen Haltestücken 50 zur Befestigung des Behälters 2 an einem hier nicht gezeigten Gestell angeordnet ist. In der Mitte der Unterseite des Innenmantels 26 ist eine auslassseitige Öffnung 26b vorgesehen, welche mit dem Auslass 3 aus Fig. 1 verbunden werden kann. Vorteilhaft kann das in dem Behälter 2 direkt hergestellte Milchersatzprodukt unmittelbar aus dem Behälter 2 entnommen werden.

Die Vorrichtung 1 zur Herstellung eines Milchersatzproduktes umfasst weiter eine Rührvorrichtung 29, welche durch den in Fig. 2 gezeigten zweiten Antriebsmotor M2 angetrieben wird. Die Rührvorrichtung 29 umfasst eine hohlzylindrische Hülse 30, welche den Deckel 14 mittig durchsetzt und in den durch den Innenmantel 26 des Behälters 2 begrenzten Hohlraum 31 hineinragt. Die hohlzylindrische Hülse 30 wird durch einen Rührstab 32 durchsetzt, welcher um die Rotationsachse R durch den zweiten Antriebsmotor M2 (siehe Fig. 1) angetrieben drehbar ist. An einem in den Hohlraum 31 hineinragenden unteren Ende der Hülse 30 ist eine Mixglocke 33 angeordnet, welche in die Hülse 30 eingepresst ist. **In** der Mixglocke 33 ist ein Drehlager 34 angeordnet, welche einen unteren Abschnitt des Rührstabes 32 radial abstützt und weiter vorteilhaft Vibrationen des Rührstabes 32 minimiert. **In** einem unteren Ende des Rührstabes 32 ist ein Rührelement 35 angeordnet, welches radial von dem Rührstab 32 abstehende Klingen umfasst.

Weiter ist zu erkennen, dass die erste Zuleitung 7 in den Hohlraum 31 hineingeführt ist und an einem in den Hohlraum 31 hineinragenden ersten Ende 7a der ersten Zuleitung 7 eine erste Reinigungsdüse 36 einer Reinigungsvorrichtung 60 befestigt ist. Analog hierzu ist die zweite Zuleitung 9 ebenso in den Hohlraum 31 hineingeführt und es ist an einem in den Hohlraum 31 hineinragenden ersten Ende 9a der zweiten Zuleitung 9 eine zweite Reinigungsdüse 37 befestigt. Die erste Reinigungsdüse 36 ist dabei in einer ersten Höhe und die zweite Reinigungsdüse 37 in einer zweiten Höhe angeordnet, wobei die zweite Höhe größer als die erste Höhe ist, sodass der Innenmantel 26 und die Rührvorrichtung 29 über ihre gesamte Erstreckung durch die Reinigungsdüsen 36, 37 erreichbar sind. Vorteilhaft wird durch die Reinigungsdüsen 36, 37 erreicht, dass das durch die erste Zuleitung 7 und die zweite Zuleitung 9 jeweils zugeführte Wasser oder die Mischung aus Wasser und Reinigungsmittel mit erhöhtem Druck in den Hohlraum 31 eingespritzt wird und so eine vollautomatische Reinigung realisiert wird.

Fig. 3 zeigt den in Fig. 1 und Fig. 2 gezeigten Deckel 14 der Vorrichtung zur Herstellung eines Milchersatzproduktes in einer Explosionsdarstellung. **In** dieser Darstellung ist insbesondere der Aufbau der in den Deckel 14 integrierten Verschlussvorrichtung 25 zu sehen. Die Verschlussvorrichtung 25 umfasst einen Antriebsmotor M3, wobei der Antriebsmotor M3 eine Ausgangswelle 38 aufweist, welche drehfest mit einem Ritzel 39 gekoppelt ist. Zur Fixierung des Antriebsmotors M3 und des mit der Ausgangswelle 38 gekoppelten Ritzels 39 mit dem oberen Deckelteil 22 des Deckels 14, weist der Deckel 14 ein Antriebsgehäuse 40 auf. Das Antriebsgehäuse 40 weist eine Öffnung 40a auf, durch welche die Ausgangswelle 38 geführt ist.

Das Ritzel 39 ist mit dem zwischen dem oberen Deckelteil 22 und dem unteren Deckelteil 23 angeordneten Verschlusselement 24 in Getriebeeingriff. Das Verschlusselement 24 weist hierzu an ihrem Außenumfang eine Außenverzahnung 24a auf, welche mit dem Ritzel 39 kämmt. Vorteilhaft wird hierdurch sichergestellt, dass das Verschlusselement 24 zuverlässig und genau gedreht werden kann. Das obere Deckelteil 22 weist an seiner Oberseite 22a den Einlass 15 für das Wasser, den Einlass 16 für die niederviskose Flüssigkeit und weiter einen Einlass 41 für die trockene Zutatenmischung auf, wobei der Einlass 41 mit dem Fülltrichter 21 gekoppelt werden kann. Darüber hinaus weist das obere Deckelteil 22 eine zentrale Bohrung 22b auf, durch welche hindurch die Hülse 30 der Rührvorrichtung 29 (siehe Fig. 2) geführt werden kann.

Das Verschlusselement 24 weist analog zum oberen Deckelteil 22 eine zentrale Bohrung 24b auf, welche im montierten Zustand durch die Hülse 30 der Rührvorrichtung 29 durchsetzt wird. Die zentrale Bohrung 22b des oberen Deckelteils 22 und die zentrale Bohrung 24b des Verschlusselementes 24 weisen dabei denselben Durchmesser auf und liegen im zusammengesetzten Zustand des Deckels 14 deckungsgleich aufeinander. Weiter weist das Verschlusselement 24 eine radial zwischen der zentralen Bohrung 24b und der Außenverzahnung 24a angeordnete erste Durchlassöffnung 24c und eine zweite Durchlassöffnung 24d auf, wobei die erste Durchlassöffnung 24c dem Einlass 41 für die Zutatenmischung zugeordnet ist und etwa denselben Innendurchmesser wie dieser aufweist.

**In** der in Fig. 3 gezeigten Darstellung ist zu sehen, dass die erste Durchlassöffnung 24c deckungsgleich mit dem Einlass 41 für die trockene Zutatenmischung angeordnet ist. Demgegenüber ist die zweite Durchlassöffnung 24d zwischen dem Einlass 15 für das Wasser und dem Einlass 16 für die niederviskose Flüssigkeit angeordnet. Vorteilhaft kann durch Drehung des Verschlusselementes 24 um die zentrale Rotationsachse R ein sequenzielles Öffnen und Verschließen der einzelnen Einlassöffnungen 15, 16, 41 vorgenommen werden, sodass eine gesteuerte Dosierung der einzelnen Bestandteile des herzustellenden Milchersatzproduktes vorgenommen werden kann.

Das untere Deckelteil 23 ist als Lochscheibe ausgebildet und weist neben einer zentralen Bohrung 23a eine erste Durchlassöffnung 23b, eine zweite Durchlassöffnung 23c und eine dritte Durchlassöffnung 23d auf. Die zentrale Bohrung 23a weist einen etwas kleineren Innendurchmesser als die zentrale Bohrung 24a des Verschlusselementes 24 bzw. als die zentrale Bohrung 22a des oberen Deckelteils 22 auf. Die erste Durchlassöffnung 23b ist deckungsgleich unter dem Einlass 41 für die Zutatenmischung angeordnet. Analog hierzu ist die zweite Durchlassöffnung 23c deckungsgleich unter dem Einlass 15 für das Wasser und die dritte Durchlassöffnung 23d deckungsgleich Einlass 16 für die niederviskose Flüssigkeit angeordnet. Vorteilhaft wird ein Durchgang für die jeweiligen Zutaten durch Drehung des Verschlusselementes 24 geöffnet oder geschlossen.

Vorstehend wurde die Erfindung anhand eines Ausführungsbeispiels erläutert, bei dem das Verschlusselement lediglich zwei Durchlassöffnungen aufweist, welche zum sequenziellen Öffnen und Schließen von drei Einlässen verwendet werden. Es versteht sich, dass das Verschlusselement auch nur lediglich eine Durchlassöffnung aufweisen kann, welche in einem gleichen radialen Abstand wie die Einlässe zu der Rotationsachse angeordnet ist. Weiter kann das Verschlusselement jedoch auch für jeden der Einlässe eine separate Durchlassöffnung aufweisen.

## Patentansprüche

1. Vorrichtung (1) zur Herstellung eines Milchersatzproduktes, umfassend
einen Behälter (2) mit einem einen Hohlraum (31) definierenden Innenmantel (26) und einer oberen Öffnung (2b) zur Aufnahme der zur Herstellung des Milchersatzproduktes erforderlichen Zutaten und einem Auslass (3) zur Entnahme des verzehrfertigen Milchersatzproduktes,
einen Deckel (14), welcher auf der Öffnung des Behälters (2) angeordnet ist,
eine Rührvorrichtung (29) zum Rühren und Dispergieren der in den Behälter (2) aufgenommenen Zutaten, wobei die Rührvorrichtung (29) zumindest ein angetrieben drehbares Rührelement (35) umfasst, welches in dem Hohlraum (31) angeordnet ist,
eine Reinigungsvorrichtung (60) zur automatisierten Reinigung zumindest des Innenmantels (26) des Behälters (2), und
eine Heizvorrichtung (28) zur Heizung des Innenmantels (26) des Behälters (2),
wobei der Deckel (14) zumindest einen ersten Einlass (41) umfasst, durch welchen hindurch bevorzugt eine Zutatenmischung in den Hohlraum (31) des Behälters (2) zugeführt werden kann, und
wobei der Deckel (14) eine Verschlussvorrichtung (25) mit einem Verschlusselement (24) zum selektiven Öffnen und Schließen des ersten Einlasses (41) umfasst, wobei das Verschlusselement (24) zumindest eine erste Durchlassöffnung (24c) aufweist, welche gegenüber dem Einlass (41) verlagerbar ist, und wobei das Verschlusselement (24) über einen Antriebsmotor (M3) zwischen einer Schließstellung, in der das Verschlusselement (24) den ersten Einlass (41) verschließt, und einer Öffnungsstellung, in der das Verschlusselement (24) den ersten Einlass (41) öffnet, verstellbar ist,
**dadurch gekennzeichnet,**
**dass** der Deckel (14) ein oberes Deckelteil (22) und ein unteres Deckelteil (23) umfasst, wobei das Verschlusselement (24) zwischen dem oberen Deckelteil (22) und dem unteren Deckelteil (23) beweglich angeordnet ist.

2. Vorrichtung nach Anspruch 1, **dadurch gekennzeichnet, dass** das obere obere Deckelteil (22) den ersten Einlass (41) aufweist, wobei das untere Deckelteil (23) eine erste Durchlassöffnung aufweist, welche deckungsgleich unter dem ersten Einlass angeordnet ist.

3. Vorrichtung nach Anspruch 1 oder 2, **dadurch gekennzeichnet, dass** das obere Deckelteil (22) und das untere Deckelteil (23) fest miteinander verbunden sind.

4. Vorrichtung nach einem der vorhergehenden Ansprüche, **dadurch gekennzeichnet, dass** das Verschlusselement (24) drehbar ist.

5. Vorrichtung nach einem der vorhergehenden Ansprüche, **dadurch gekennzeichnet, dass** das Verschlusselement (24) linear geführt ist.

6. Vorrichtung nach einem der vorhergehenden Ansprüche, **dadurch gekennzeichnet, dass** der Auslass (3), durch welchen das verzehrfertige Milchersatzprodukt in Ausflussrichtung (A) entnehmbar ist, an einem Boden (2a) des Behälters (2) angeordnet ist.

## Claims

1. Apparatus (1) for the manufacture of a milk substitute product, comprising
a container (2) with an inner casing (26) defining a cavity (31) and an upper opening (2b) for receiving the ingredients required for producing the milk substitute product and an outlet (3) for extracting the ready-to-eat milk substitute product,
a lid (14), which is arranged on the opening of the container (2),
a stirring device (29) for stirring and dispersing the ingredients received in the container (2), wherein the stirring device (29) comprises at least one driven rotatable stirring element (35) which is arranged in the cavity (31),
a cleaning device (60) for automated cleaning of at least the inner casing (26) of the container (2), and
a heating device (28) for heating the inner casing (26) of the container (2),
wherein the lid (14) comprises at least a first inlet (41) through which an ingredient mixture can preferably be fed into the cavity (31) of the container (2), and
wherein the lid (14) comprises a closure device (25) with a closure element (24) for selectively opening and closing the first inlet (41),
wherein the closure element (24) has at least a first passage opening (24c) which is displaceable relative to the inlet (41), and wherein the closure element (24) is adjustable via a drive motor (M3) between a closed position, in which the closure element (24) closes the first inlet (41), and an open position, in which the closure element (24) opens the first inlet (41),
**characterised in that**
that the lid (14) comprises an upper lid part (22) and a lower lid part (23), wherein the closure element (24) is movably arranged between the upper lid part (22) and the lower lid part (23).

2. Device according to claim 1, **characterised in that** the upper lid part (22) has the first inlet (41), the lower lid part (23) having a first passage opening which is arranged congruently below the first inlet.

3. Device according to claim 1 or 2, **characterised in that** the upper lid part (22) and the lower lid part (23) are firmly connected to each other.

4. Device according to one of the preceding claims, **characterised in that** the closure element (24) is rotatable.

5. Device according to one of the preceding claims, **characterised in that** the closure element (24) is guided linearly.

6. Device according to one of the preceding claims, **characterised in that** the outlet (3), through which the ready-to-eat milk substitute product can be extracted in the outflow direction (A), is arranged on a base (2a) of the container (2).

## Revendications

1. Dispositif (1) pour la fabrication d'un produit de substitution du lait, comprenant
un récipient (2) avec une enveloppe intérieure (26) définissant une cavité (31) et une ouverture supérieure (2b) pour recevoir les ingrédients nécessaires à la fabrication du produit de substitution du lait et une sortie (3) pour prélever le produit de substitution du lait prêt à être consommé,
un couvercle (14), qui est disposé sur l'ouverture du récipient (2),
un dispositif d'agitation (29) pour agiter et disperser les ingrédients reçus dans le récipient (2), le dispositif d'agitation (29) comprenant au moins un élément d'agitation (35) rotatif et entraîné, qui est disposé dans la cavité (31),
un dispositif de nettoyage (60) pour le nettoyage automatisé d'au moins l'enveloppe intérieure (26) du récipient (2), et
un dispositif de chauffage (28) pour chauffer l'enveloppe intérieure (26) du récipient (2),
dans lequel le couvercle (14) comprend au moins une première entrée (41) à travers laquelle de préférence un mélange d'ingrédients peut être alimenté dans la cavité (31) du récipient (2), et
dans lequel le couvercle (14) comprend un dispositif de fermeture (25) avec un élément de fermeture (24) pour ouvrir et fermer sélectivement la première entrée (41), l'élément de fermeture (24) présentant au moins une première ouverture de passage (24c) qui peut être déplacée par rapport à l'entrée (41), et l'élément de fermeture (24) pouvant être déplacé par un moteur d'entraînement (M3) entre une position de fermeture, dans laquelle l'élément de fermeture (24) ferme la première entrée (41), et une position d'ouverture, dans laquelle l'élément de fermeture (24) ouvre la première entrée (41),
**caractérisé en ce**
**que** le couvercle (14) comprend une partie de couvercle supérieure (22) et une partie de couvercle inférieure (23), l'élément de fermeture (24) étant disposé de manière mobile entre la partie de couvercle supérieure (22) et la partie de couvercle inférieure (23).

2. Dispositif selon la revendication 1, **caractérisé en ce que** la partie de couvercle supérieure (22) comprend la première entrée (41), la partie de couvercle inférieure (23) comprenant une première ouverture de passage qui est située en coïncidence sous la première entrée.

3. Dispositif selon la revendication 1 ou 2, **caractérisé en ce que** la partie supérieure du couvercle (22) et la partie inférieure du couvercle (23) sont solidaires l'une de l'autre.

4. Dispositif selon l'une des revendications précédentes, **caractérisé en ce que** l'élément de fermeture (24) est rotatif.

5. Dispositif selon l'une des revendications précédentes, **caractérisé en ce que** l'élément de fermeture (24) est guidé linéairement.

6. Dispositif selon l'une des revendications précédentes, **caractérisé en ce que** la sortie (3) par laquelle le produit de substitution du lait prêt à être consommé peut être prélevé dans le sens de l'écoulement (A) est disposée sur un fond (2a) du récipient (2).
